# EUROPEAN PATENT SPECIFICATION

(11) **EP 1 585 903 B1**
(45) Date of publication and mention of the grant of the patent: **19.09.2012**
(21) Application number: 03782642.7
(22) Date of filing: 19.12.2003
(51) Int. Cl.: F16C 11/06, F16C 11/04, B25J 17/02, G01B 3/00, G01B 5/004

(54) **PIVOT JOINT**
DREHVERBINDUNG
JOINT ARTICULE

(30) Priority: 15.01.2003 GB 0300839; 20.08.2003 GB 0319532
(43) Date of publication of application: 19.10.2005
(73) Proprietor: Renishaw plc, Gloucestershire GL12 8JR (GB)
(72) Inventor: McMurtry, David, Roberts, Gloucestershire GL11 6AT (GB); Evans, Finlay, Jonathan, Wiltshire SN14 8DF (GB)
(74) Representative: Fowler, Maria Jayne
(86) International application number: PCT/GB2003/005539
(87) International publication number: WO 2004/063579

(56) References cited:
- WO-A-95/20747
- WO-A-03/006837
- DE-A- 3 818 254
- DE-A- 4 333 913
- DE-C- 19 938 242
- FR-A- 947 212
- US-A- 3 490 798
- US-A- 5 568 993

## Description

The present invention relates to a pivot joint, in particular a ball joint.

Pivot joints which comprise a ball on a stalk are known. In such pivot joints the ball is located within a socket with the stalk protruding from the socket. These pivot joints have the disadvantage that they are not high precision, particularly because the ball part is not accurately spherical. A further disadvantage is that parts cannot be cheaply replaced when worn. As such joints wear, their positional accuracy decreases which can result in undesirable movement at the pivot point.

Accurate spheres (i.e. ball bearings) can be made very precisely by a lapping process.

The present invention provides a pivot joint comprising:
a first structure comprising a ball retained in a receptacle; and
a second structure movable with respect to the first structure and in contact with the ball via a bearing, the contact defining location of a pivot point characterised in that:
   the bearing is shaped to receive the ball wherein, as the bearing wears, the pivot point is substantially maintained in its defined location and in that the pivot joint further comprises a third structure moveable with respect to the first and second structures whereby the third structure is in contact with the ball via a further bearing, the contact defining the location of a pivot point which is substantially maintained in its defined location as the bearing surface wears.

A pivot joint according to the preamble of claim 1 and comprising such first and second structures is known from WO 03/006837; there is, however, no disclosure in W 03/006837 of a pivot joint comprising a third structure.

An advantage of a pivot joint according to the invention is that undesirable movement in the plane of the pivot joint is mitigated thus the joint has minimal longitudinal movement and the overall length of the structures connected via the pivot joint remains substantially the same over time. This means that the joint is less susceptible to the effects of wear and may remain within tolerance levels for longer increasing either the lifetime of the joint or the time between the replacement of parts of the joint.

In a preferred embodiment, the second structure is biased into contact with the ball at the bearing. Such biasing may be provided by a spring, magnetic force, a pressure differential (e.g. vacuum) or elastic band, for example.

The use of a bias helps to ensure that the ball is at least partially received by the second structure on the bearing at the correct position. This will result in the wearing process on the bearing occurring at the desired places in order to maintain the pivot point at substantially its defined location.

The ball is preferably a precision ball for example a lapped ball such as a ball bearing. The ball, even when retained in the receptacle, is independent i.e. not fixed in location by use of a screw, stud or other means which affects sphericity of the ball and thus accuracy. Such an independent ball may act as a precision bearing and in addition, provides the location point of the joint. The ball is retained in the receptacle by clamping, gluing, welding or braising for example, other methods which do not distort the shape of the ball are also appropriate.

The bearing may comprise an air bearing, a roller bearing or a plane bearing. Thus, the bearing may be provided by a surface of the first (and third) structure. Alternatively, a separate bearing, for example comprising a number of ball bearings in a race, provides the contact between the structures.

Embodiments of the invention will now be described by way of example and with reference to the accompanying drawings in which:
Fig 1 is an isometric view of pivot joints according to prior art
Figs 2a and 2b are views of one part of such a pivot joint;
Fig 3 is a plan view of an alternative part of such a pivot joint;
Figs 4a, 4b and 4c show isometric views of pivot joints according to the invention;
Fig 4d shows a cross-section through plane A-A of the pivot joint shown in Fig 4a; and
Fig 5 is an isometric view of a coordinate measuring machine using a pivot joint of the invention.

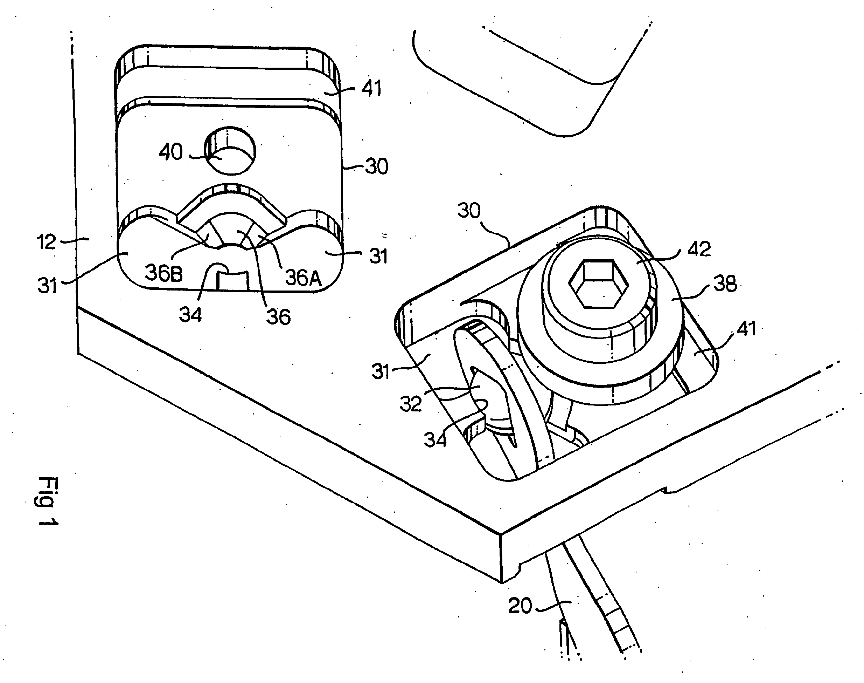

Fig 1 is an isometric view of two pivot joints. The first structure is provided by a receptacle for a ball and a ball. A platform 12 is provided with structured cut-outs 30 (the receptacle). A ball 32 of the pivot joint is supported within the cut-out 30 by surfaces defining the periphery of the cut-out 30. Two cut-outs 30 are shown in Fig 1, one with the other components of the ball joint in place and the other without.

The ball 32 is supported by two opposite surfaces 34,36 of the cut-out 30. A first curved surface 34 contacts a side of the ball 32, and a second curved surface 36 contacts a lower surface of the ball 32 with two points of contact 36A,36B. The position of the ball 32 is defined by these three points of contact 34,36A,36B and a fourth point of contact provided by a clamp 38,42. The ball is thus kinematically and repeatably located within the cut-out.

In this example the clamp comprises a washer 38 and a fixing device 42, such as a screw or bolt. The washer 38 sits on a shelf 41 provided in the cut-out 30 in the upper stage 12, an edge of its lower surface in contact with the ball 32. The platform 12 is provided with a hole 40 aligned with the centre of the washer 38, to receive the fixing device 42 which holds the washer 38 against the ball 32. The ball 32 is thus held rigidly in a fixed position at four places around its surface by the first curved surface 34, by two points of contact 36A,36B on the second curved surface 36, and by the washer 38.

A second structure 20 is provided with a hole 45 which partly receives and fits over a ball 32 of a respective joint.

The ball is retained in a receptacle and acts as a precision surface for the centre of the bearing and, in addition, the ball provides the link between the two parts of the joint.

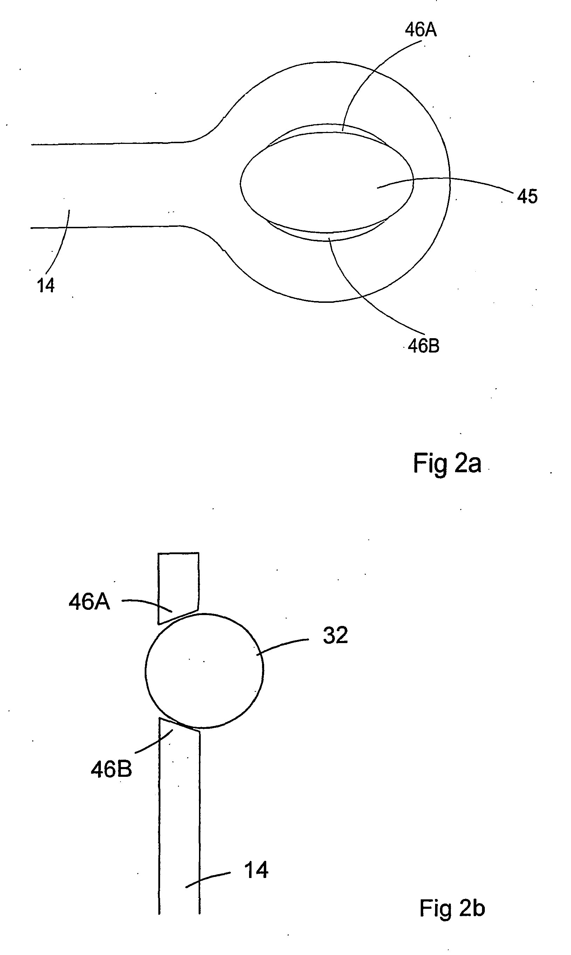

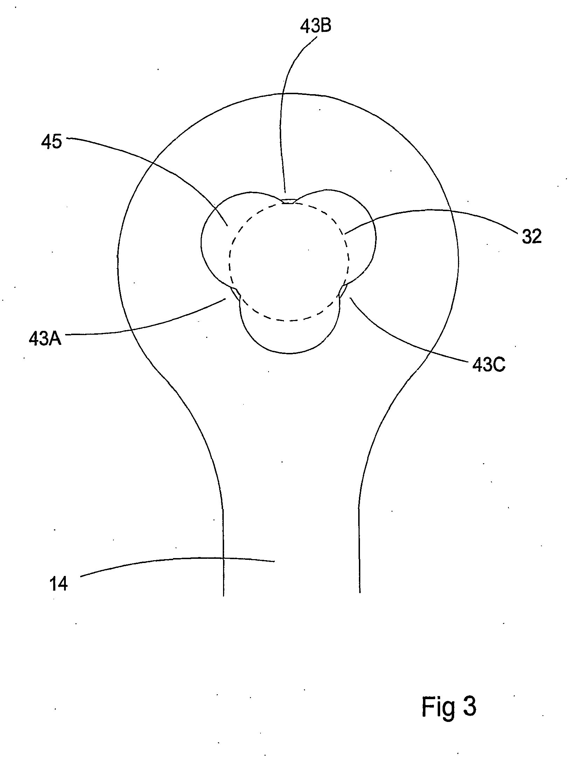

Figs 2a,2b and 3 show arrangements of a second structure having a plane bearing. In Fig 2a the hole 45 is oval with only two bearing surfaces 46A,46B. As the bearing surfaces wear, they sit further down onto the surface of the ball, thus reducing rattle between the bearing surfaces and the ball. This arrangement is particularly suitable when the force on the bearing surface is parallel to an axis perpendicular to the plane of the bearing surfaces (for example if the ball joint is used in a jack).

Fig 3 shows an alternative arrangement of the bearing surfaces. Each hole 45 is shaped to have three bearing surfaces 43A,B,C, spaced at 120° apart. Only the three bearing surfaces are in contact with the ball 32. These bearing surfaces have small areas of contact with the ball 32 to maximise slide between the surfaces.

The bearing surfaces are sloped, preferably at a shallow angle allowing the ball to sit on the surfaces (see Fig 2b). An angle of between about 15° and 45° to a line perpendicular to the plane of the bearing surfaces is suitable. Thus, each of the surfaces of the hole adapted to receive the ball describes a cone. The surfaces may describe a single cone or different, non-concentric cones where the contact radius of each cone is greater than the radius of the ball.

An angle of less than about 15° may result in the ball becoming jammed in the hole which, of course, affects the mobility of the joint. An angle of greater than about 45° requires increasingly large loads to force the ball to be received in the hole. The preferred angle is about 15-30° with the range of about 15-20° most preferred as this shallow angle provides a good compromise between the sliding action of the bearing surface with respect to the ball and the ease with which the ball is received within the hole. A shallow angle is useful if the bearing surfaces are urged together by a spring as it enables a weaker spring to be used than if steeper angles are used.

For Fig 2, the two bearing surfaces are curved in two dimensions. Firstly through the thickness of the second structure to partially receive the ball (Fig 2b) and, secondly in the longitudinal direction of the structure (Fig 2a) where the width of the bearing surfaces is at a maximum at the position where it is desired to seat the ball (in this case this is central to the oval aperture) tapering off either side of this desired position. This tapering encourages the ball to seat in the desired position.

For Fig 3, the three bearing surfaces are planar through the thickness of the structure and curved through the plane of the structure so as to describe part of a cone which has a surface defined by the bearing surfaces i.e. they are conical in shape. The ball sits on these three small areas of contact.

Although the examples show the second structure 14,20 encircling the ball 32, this is not essential. Thus, the second structure may substantially encircle the ball with a gap in the structure (the limiting size of any gap is a function of the diameter of the ball and the position of the bearing surfaces of the.second structure).

As an alternative to using bearing surfaces of one of the structures, a separate bearing is housed between the structures. In this example, it is preferred that in addition to the bearing surface which receives the ball being shaped to achieve this, that both the other bearing surface and the communicating surface of the second structure are also so shaped. This shaping assists in maintaining the pivot joint in its location. If the bearing is an air bearing, then the distance between the two structures should be maintained at a substantially constant value thus, the surfaces of the first and second structures which cooperate are required to have co-operating forms. Thus, in one embodiment the ball may float between the receptacle and second structure and spin freely with respect to both.

Regardless of the type of bearing used, it is preferred that the first and second structures are manufactured relative to each other.

For a high precision joint, a bias may be used to force the second structure into contact with the ball. For lower precision applications, this may be dispensed with by carefully selecting the angle of the bearing surface.

One way of urging the bearing surfaces onto the ball 32 is by biasing the second structure 14,20. This can be achieved by providing a plate which has one end clamped to the second structure 14,20 and the other end pressing against the ball 32. The plate thus acts like a leaf spring. The clamp is preferably removably fixed by, for example, a screw, to enable removal of the ball 32 for maintenance or replacement thereof. The word plate is intended to include all the various shapes and structures that are suitable for providing a bias such as a washer. Such a plate could be used in conjunction with washer 38 or as a replacement.

When a bias is used, it ensures that all the contact points between the ball and the second (and also third) structures are equally rigid and loaded so all contacts have equal wear rates.

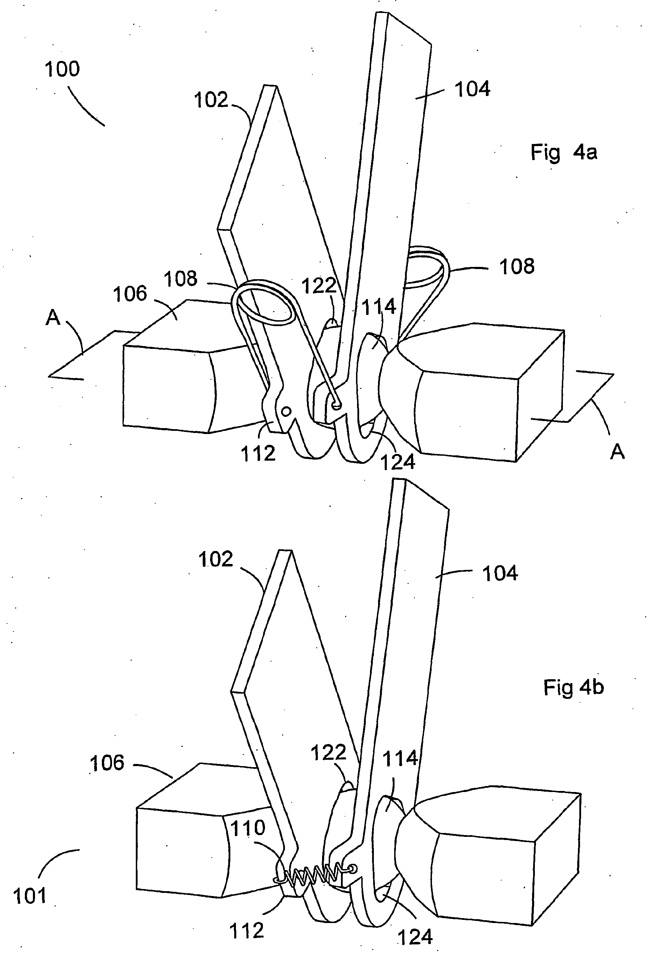

Figs 4a and 4b show isometric views of pivot joints 100 and 101 respectively. The first structure is provided by a receptacle 106 for a ball and a ball 114.

Second and third structures are provided by two struts 102,104 which are each provided with a hole 122,124 respectively near an end which partly receive and fit over the ball 114. The two struts 102,104 are located diametrically opposite each other on the ball 114. The distal ends of the second and third structures are also provided with pivot joints. These distal pivot joints can be of the single strut variety or double strut joints where either the same two struts, or one of these struts and a different strut coincide.

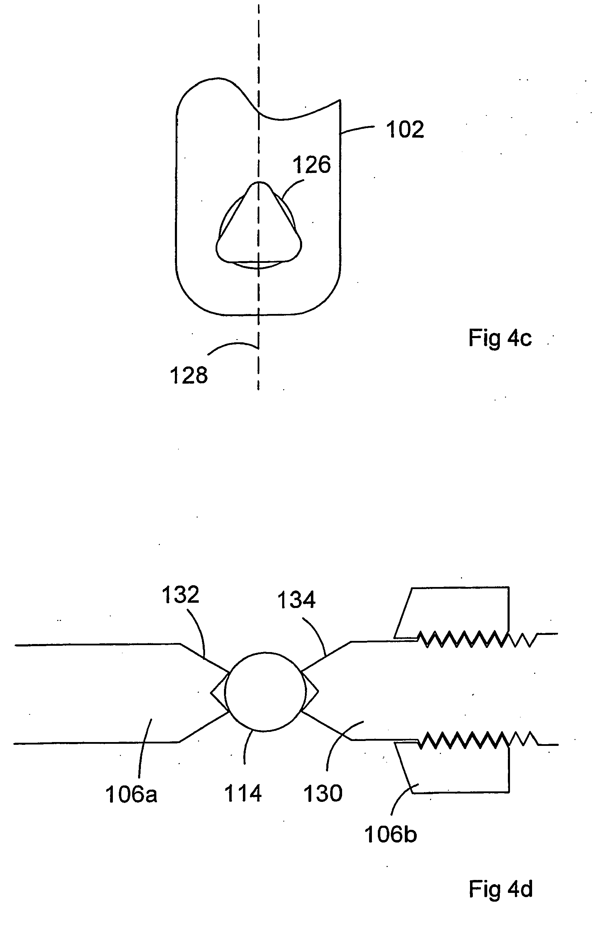

The holes 122,124 in the struts are each shaped as rounded triangles (see Fig 4c) in order to provide three bearing surfaces 126A,B,C - one on each side of the triangular structure - in contact with the ball. The bearing surfaces are angled so are not perpendicular to the longitudinal axis 128 of the struts. This allows the ball 114 to be seated (partially) within the holes 122,124.

In order to ensure that the two struts 102,104 each contact the ball at the three bearing surfaces, the two struts are biased together. Fig 4a shows two u-shaped springs 108 which act on opposite sides of the struts. Each spring 108 connects between a lug 112 on the struts pulling the struts together and the bearing surfaces onto the ball surface. Fig 4b shows an alternative arrangement where two coil springs 110 are connected across the lugs 112 of the two struts (the second coil spring not shown).

Alternatively, the springs are located between facing sides of the struts either near the holes in the struts or, if a stronger spring is used, about halfway along the length of the struts (this may enable the biasing of both ends of the struts using one spring)

As opposed to using a spring to bias the bearing surfaces into contact with the ball surface, magnetic attraction can be used. Here the lug on each strut houses or includes a magnet. The magnets are positioned such that opposite poles face the gap between the two struts thus the two struts are magnetically attracted and locate correctly around the ball.

As an alternative to the struts being pulled towards each other, the struts can be each be pushed towards the bearing surface and each other by a bias (spring, magnetic force, pressure differential etc) on the receptacle.

The ball 114 is supported in the receptacle 106 by clamping between two receiving surfaces 132,134 provided on one side by the receptacle 106a (see Fig 4d) and, at an approximately diametrically opposed point of the ball, by a grub screw 130 which is rotatably mounted within the receptacle 106b. The use of one movable receiving surface 134 enables easy positioning of the ball 114 with respect to the two struts 102, 104 and the receptacle 106a,106b. Only the receptacle and ball have been shown in Fig 4d for clarity.

Alternatively, the ball may be push-fitted into a correspondingly sized gap in the receptacle. Or, the ball may be mounted on a central rod (not shown) which passes through the centre of the ball 114 and into the receptacle 106 on either side of it, the rod exits the receptacle on one side (not shown) and is clamped ensuring that the ball 114 is fixed in the receptacle 106.

A double strut pivot joint such as has been described has a number of applications, one of these is in a coordinate measuring machine. Such a machine comprises two platforms which are linked by at least three struts which are of changeable length. An example is a hexapod which is described more fully in International Patent Application WO95/20747.

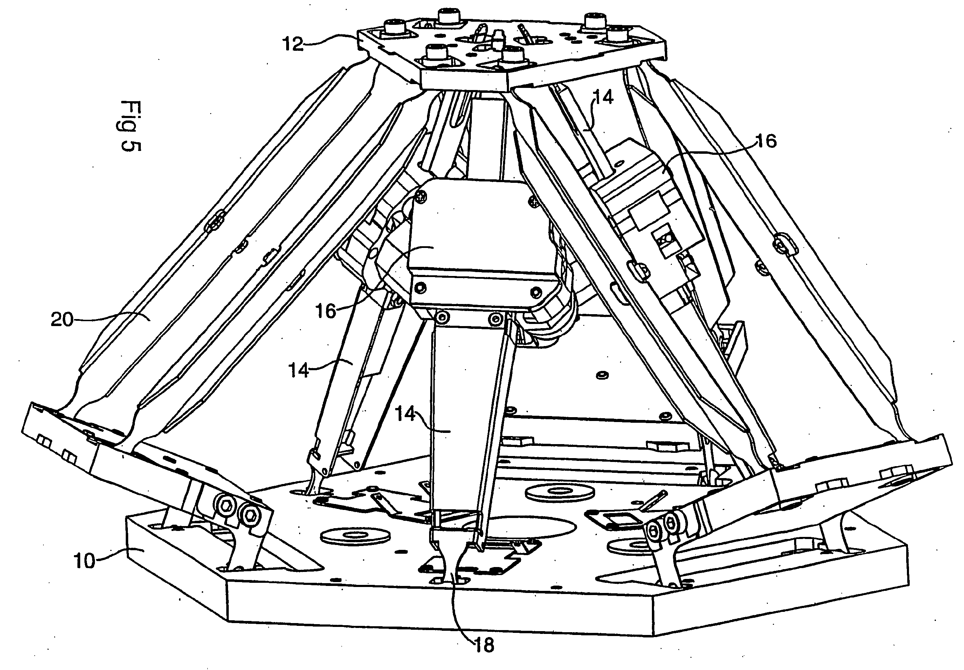

Fig 5 shows a coordinate measuring machine using pivot joints according to the invention. The coordinate measuring machine comprises a lower fixed stage 10 and an upper movable stage 12. The upper and lower stages are linked by telescopic struts 14, each strut being connected to the upper and lower stages at its respective upper and lower ends by.pivot joints. Each strut has a motor 16 to increase or decrease its length.

As the upper stage 12 is supported only by the three telescopic struts 14 which are connected to the upper and lower stages by pivot joints, this stage may rotate about three perpendicular axes relative to the lower stage 10. To prevent this, three anti-rotational devices 20 are provided which eliminate these three degrees of rotational freedom whilst allowing translational movement. The devices are passive, i.e. they have no motor or other actuator. The joints between the anti-rotational devices 20 and the upper and lower stages 12,10 are also pivot joints. The upper stage 12 comprises the receptacles and balls (first structures) for a number of pivot joints. Each strut 14 and anti-rotational device 20 forms a second structure (it is not essential for all the joints to be according to the invention).

The struts 14 and anti-rotational devices 20 are formed from a good bearing material, such as phosphor bronze. The strut 14 may be made by etching and then machining or stamping the holes 45 to accurately control the length and geometry of the holes 45.

In the event of a jolt the bearing surfaces will spring off the ball, hit a solid stop (i.e. the edges of the cut-out structure 30) and return to their position on the ball. The ball joint is thus self-protecting. Where high precision ball joints are required, coil springs may be provided, for example between the two parts of an anti-rotational device 20, to urge the bearing surface(s) onto the ball 32. Such springs would assist in returning the bearing surfaces onto the ball after any jolt. Such springs would also aid in maintaining the location of the ball with respect to the bearing surface. Thus, as the bearing surfaces wear, the ball would remain (quasi-) kinematically located in position maintaining a constant length of strut.

In this embodiment, where the ball is retained and supported by the cut-out, the ball remains located with respect to the joint when the strut (or second structure) is not engaged with the ball at the bearing.

The use of a bias ensures that the ball repeatedly contacts the bearing surfaces at the correct location, according to the shape of the bearing surface, to minimise lateral movement of the ball with respect to the second structure as the bearing surface wears. Thus, the active length of a strut 14 or anti-rotational device 20 remains stable over time and with wear of the machine. The active length is the length between the centre of the pivot joints at each end of the structure 14,20. If this active length were not maintained, then after a period of use, the machine would not position itself where dictated by the machine motors as there would be lateral movement in the structure which would not be the same for each joint. For struts 14, this would affect the position of the upper stage 12 in the x,y or z direction. For anti-rotational devices 20, this affects the rotation of the upper stage 12 with respect to the lower fixed stage 10 and the degree of parallelism achieved between the two stages. This pivot joint has the advantages that it is both cheap to manufacture and easy to assemble.

The cut-out structure which holds the ball is easy to machine. Repeatable (kinematic) positioning of a free ball within this structure enables the ball to be easily replaced. This also enables correct geometric positioning of the parts on assembly of the machine. Furthermore use of commercially available accurate spheres (for example ball bearings) combined with precise positioning in the structure produces a high precision ball joint which ensures a good seating position of the ball within the aperture of the second structure. The ball may be retained in position by clamping, gluing, welding or any other method which maintains the integrity of the ball as a sphere.

The use of the word pivot in the phrase pivot joint throughout this specification is defined as including pivot joints with one, two and three degrees of freedom as well as universal joints having two or three degrees of freedom.

The ball used in the pivot joint may be made of any hard/low friction material or alternatively made of any material coated with a hard/low friction material.

Although the above example describes the use of a pivot joint in a coordinate measuring machine, this pivot joint is not limited to use with such machines and may be used in other applications. Examples of other applications include positioning machines such as robots, machine tools, measuring machines, also non-cartesian mechanisms and other parallel kinematic machines.

## Claims

1. A pivot joint comprising:
a first structure (10,12) comprising a ball (32,114) retained in a receptacle (30,106);
a second structure (14,20,102,104) movable with respect to the first structure and in contact with the ball via a bearing (43,46,126), the contact defining location of a pivot point, **characterised in that**:
the bearing is shaped to receive the ball wherein, as the bearing wears, the pivot point is substantially maintained in its defined location, and **in that** the pivot joint further comprises a third structure (104) moveable with respect to the first and second structures whereby the third structure is in contact with the ball via a further bearing, the contact defining the location of a pivot point which is substantially maintained in its defined location as the bearing surface wears.

2. A pivot joint according to claim 1 wherein, the second structure (14,20,102) is biased (108,110) into contact with the ball (32,114) at the bearing.

3. A pivot joint according to claim 1 or claim 2 wherein, the second structure (14,20,102) provides the bearing.

4. A pivot joint according to any preceding claim wherein, the bearing (43,46,126) comprises two or three bearing surfaces (43A,43B,43C,46A,46B,126A,126B,126C).

5. A pivot joint according to claim 4 wherein, each bearing surface (43A,43B,43C,46A,46B,126A,126B,126C) is sloped at an angle of between about 15 and 45° to a line perpendicular to the plane of the bearing surface.

6. A pivot joint according to any preceding claim wherein, the further bearing is provided by the third structure.

7. A pivot joint according to any preceding claim wherein the ball is retained in the receptacle by contact with the receptacle at at least two points.

8. A pivot joint according to claim 7 wherein, two points of contact are provided at approximately diametrically opposed points of the ball.

9. A pivot joint according to any preceding claim wherein the ball is a precision ball.

10. A positioning machine comprising a pivot joint according to any preceding claim.

11. A measuring machine comprising a pivot joint according to any of claims 1 to 9.

12. A parallel kinematic machine comprising a pivot joint according to any of claims 1 to 9.

## Patentansprüche

1. Schwenkgelenk, umfassend:
einen ersten Aufbau (10, 12) mit einer Kugel (32, 114), die in einer Aufnahme (30, 106) gehalten ist;
einem zweiten Aufbau (14, 20, 102, 104), der in Bezug auf den ersten Aufbau und in Kontakt mit der Kugel über ein Lager (43, 46, 126) bewegbar ist, wobei der Kontakt eine Stelle eines Schwenkpunkts definiert,
**dadurch gekennzeichnet, dass**
das Lager so geformt ist, dass die Kugel aufgenommen wird, wobei, wenn das Lager verschleißt, der Schwenkpunkt im Wesentlichen an seiner definierten Stelle beibehalten wird, und dass das Schwenkgelenk ferner einen dritten Aufbau (104) umfasst, der in Bezug auf den ersten und zweiten Aufbau bewegbar ist, wobei der dritte Aufbau in Kontakt mit der Kugel über ein weiteres Lager steht, wobei der Kontakt die Stelle eines Schwenkpunktes definiert, der im Wesentlichen an seiner definierten Stelle beibehalten wird, wenn die Lagerfläche verschleißt.

2. Schwenkgelenk nach Anspruch 1,
wobei der zweite Aufbau (14, 20, 102) in Kontakt mit der Kugel (32, 114) an dem Lager vorgespannt (108, 110) ist.

3. Schwenkgelenk nach einem der Ansprüche 1 oder 2,
wobei der zweite Aufbau (14, 20, 102) das Lager bereitstellt.

4. Schwenkgelenk nach einem der vorhergehenden Ansprüche,
wobei das Lager (43, 46, 126) zwei oder drei Lagerflächen (43A, 43B, 43C, 46A, 46B, 126A, 126B, 126C) umfasst.

5. Schwenkgelenk nach Anspruch 4,
wobei jede Lagerfläche (43A, 43B, 43C, 46A, 46B, 126A, 126B, 126C) unter einem Winkel zwischen etwa 15 und 45° zu einer Linie rechwinklig zu der Ebene der Lageroberfläche schräggestellt ist.

6. Schwenkgelenk nach einem der vorhergehenden Ansprüche,
wobei das weitere Lager durch den dritten Aufbau vorgesehen ist.

7. Schwenkgelenk nach einem der vorhergehenden Ansprüche,
wobei die Kugel in der Aufnahme durch Kontakt mit der Aufnahme an zumindest zwei Punkten gehalten ist.

8. Schwenkgelenk nach Anspruch 7,
wobei zwei Kontaktpunkte bei etwa diametral gegenüberliegenden Punkten der Kugel vorgesehen sind.

9. Schwenkgelenk nach einem der vorhergehenden Ansprüche,
wobei die Kugel eine Präzisionskugel ist.

10. Positionierungsvorrichtung, mit einem Schwenkgelenk nach einem der vorhergehenden Ansprüche.

11. Messvorrichtung mit einem Schwenkgelenk nach einem der Ansprüche 1 bis 9.

12. Parallelkinematikvorrichtung mit einem Schwenkgelenk nach einem der Ansprüche 1 bis 9.

## Revendications

1. Articulation rotoïde comportant :
une première structure (10,12) comprenant une bille (32,114) retenue dans un réceptacle (30,106) ;
une deuxième structure (14,20,102,104) qui peut être déplacée par rapport à la première structure et qui est en contact avec la bille via un roulement (43,46,126), le contact définissant l'emplacement d'une articulation rotoïde, qui se **caractérise en ce que** :
le roulement est formé pour recevoir la bille de manière que, à mesure que le roulement s'use, l'articulation rotoïde soit sensiblement maintenue à son emplacement défini, et que l'articulation rotoïde comprenne en outre une troisième structure (104) pouvant être déplacée par rapport aux première et deuxième structures, la troisième structure étant en contact avec la bille via un autre roulement, le contact définissant l'emplacement d'une articulation rotoïde étant sensiblement maintenu à son emplacement défini à mesure que la surface du roulement s'use.

2. Articulation rotoïde selon la revendication 1, dans laquelle la deuxième structure (14,20,102) est contrainte (108,110) à être en contact avec la bille (32 114) au niveau du roulement.

3. Articulation rotoïde selon la revendication 1 ou 2, dans laquelle la deuxième structure (14,20,102) constitue le roulement.

4. Articulation rotoïde selon l'une quelconque des revendications précédentes, dans laquelle le roulement (43,46,126) comporte deux ou trois surfaces de roulement (43A,43B,43C,46A,46B,126A,126B,126C).

5. Articulation rotoïde selon la revendication 4, dans laquelle chaque surface de roulement (43A,43B,43C,46A,46B,126A,126B,126C) est inclinée à un angle compris entre environ 15 et 45° par rapport à une ligne perpendiculaire au plan de la surface du roulement.

6. Articulation rotoide selon l'une quelconque des revendications précédentes, dans laquelle le roulement complémentaire est constitué par la troisième structure.

7. Articulation rotoïde selon l'une quelconque des revendications précédentes, dans laquelle la bille est retenue dans le réceptacle par un contact avec le réceptacle au niveau d'au moins deux points.

8. Articulation rotoïde selon la revendication 7, dans laquelle deux points de contact sont pourvus à des points diamétralement opposés de la bille.

9. Articulation rotoïde selon l'une quelconque des revendications précédentes, dans laquelle la bille est une bille de précision.

10. Machine de positionnement comprenant une articulation rotoïde selon l'une quelconque des revendications précédentes.

11. Machine de mesure comportant une articulation rotoïde selon l'une quelconque des revendications 1 à 9.

12. Machine cinématique parallèle comportant une articulation rotoïde selon l'une quelconque des revendications 1 à 9.
